# EUROPEAN PATENT APPLICATION

(11) **EP 4 215 566 A1**
(43) Date of publication of application: **26.07.2023**
(21) Application number: 22773886.1
(22) Date of filing: 10.01.2022
(51) Int. Cl.: C08G 77/04, C08L 83/04, C01B 33/158

(54) **POROUS SILICON RESIN AND LIGHTWEIGHT FLEXIBLE FLAME-RETARDANT COMPOSITE MATERIAL**

(30) Priority: 05.01.2022 CN 202210005560
(71) Applicant: Aerospace Research Institute of Materials & Processing Technology, Beijing 100076 (CN)
(72) Inventor: SHI, Jianjun, Beijing 100076 (CN); WANG, Wei, Beijing 100076 (CN); KONG, Lei, Beijing 100076 (CN); FENG, Zhihai, Beijing 100076 (CN); YANG, Yunhua, Beijing 100076 (CN); LI, Junning, Beijing 100076 (CN); WANG, Jinming, Beijing 100076 (CN); GENG, Qiong, Beijing 100076 (CN); ZHAO, Lei, Beijing 100076 (CN); LU, Wu, Beijing 100076 (CN)
(74) Representative: Global IP Europe Patentanwaltskanzlei
(86) International application number: PCT/CN2022/071087
(87) International publication number: WO 2022/199223

(57) **Abstract**

Provided are a porous silicone resin and a light-weight flexible flame-retardant composite material, belonging to the technical field of nano-porous materials. The porous silicon resin is prepared from a porous silicon resin precursor solution by means of curing and drying processes. The porous silicone resin precursor solution includes a flame retardant, a surfactant, a siloxane monomer, a catalyst, an auxiliary agent and a solvent. The porous silicone resin precursor solution is obtained by firstly dissolving the flame retardant and the surfactant in the solvent, and then adding the siloxane monomer, the catalyst and the auxiliary agent and mixing them uniformly. The porous silicone resin and the light-weight flexible flame-retardant composite material prepared therefrom have the excellent properties of high porosity, high flame retardancy, high elasticity and high strain.

## Description

### BACKGROUND

### Field of the Application

The present application belongs to the technical field of nano-porous materials, in particular to a porous silicone resin and a light-weight flexible flame-retardant composite material, more particularly belongs to a porous silicone resin and a preparation method thereof, and a light-weight flexible flame-retardant composite material based on porous silicone resin as a matrix and a preparation method thereof.

### Background of the Application

In the fields of thermal protection, heat sealing and flameretardant materials, silicone materials are often used as high temperature resistant sealing materials, high temperature thermal insulation materials, anti-oxidative coating materials, anti-oxidative ablation materials and many other fields. Silicone resins have excellent high temperature resistance, oxidation resistance and excellent construction properties, and are widely used in technical fields such as fire protection, construction, and extreme fire environments. For example, flame retardant materials for high-speed rail interiors, matrix resins for heat-resistant coatings, heat-sealing of key parts, anti-oxidation coatings, etc. With the demand for materials such as weight reduction, long-term heat insulation, and low dielectric loss in the fields of fire safety and heat sealing of electronic products, traditional dense materials have gradually been unable to meet the needs of advanced fire protection, flame retardant and heat sealing materials, so that the composite materials based on silicone resin continue to develop in the direction of low thermal conductivity and low density.

In the prior art, the density and thermal conductivity of the material are reduced by introducing void structures into the silicone resin matrix. For example, the document "Development of Heat-Proof Structure of Shenzhou Spacecraft" discloses a silicone resin, the material density is reduced to about 0.5g/cm³, and the thermal conductivity is about 0.25 W/(m·K) by adding hollow particles to the silicone rubber matrix (Spacecraft Engineering, 2004, 13(3): 14-19); in the disclosed example of patent ZL01117235.5, a foaming agent is introduced into the silicone resin matrix, and the organic components are decomposed by high-temperature treatmentafter cross-linking and curingto form a porous silicone resin ceramic body. However, the porous silicone resin prepared by adding hollow particles or this direct high-temperature foaming into pores is brittle, easy to crack, and difficult to use as a high-temperature ablation body.

Patent CN105692631B discloses a method for preparing silica aerogel at atmospheric pressure, by using metal salt compounds to modify the aged silica wet gel to obtain the modified wet gel, and then directly drying at atmospheric pressure to obtain a silica aerogel. Patent CN110922095B discloses a preparation method of composite silica aerogel mat, by mixing water, silica aerogel powder, resin, curing agent and low-density microspheres uniformly to obtain aerogel slurry; then dipping a plurality of single-layer fiber mats respectively in the aerogel slurry and stacking together to obtain a multi-layer aerogel fiber mat; finally, curing under certain conditions to obtaina composite silica aerogel mat. Although the above patents all use a small molecule siloxane monomer as the silicon source to prepare rigid or flexible silicon aerogels by the sol-gel method, the silicon aerogels prepared by the above methods are prone to burning, ablation peelingin extreme fire environment, does not have flame retardant properties, cannot meet the needs of thermal protection materials in flame retardant, ultra-lightweight, high strength and other aspects.

### SUMMARY

In view of the deficiencies and defects existing in the prior art, the present application aims to provide a porous silicone resin and a preparation method thereof, as well as a light-weight flexible flame-retardant composite material based on the porous silicone resin as a matrix and a preparation method thereof. The prepared porous silicone resin and light-weight flexible flame-retardant composite material according to the present application have excellent properties of high porosity, high flame retardancy, high elasticity and high strain.

In order to achieve the above purpose, the following technical solutions are adopted.

A first aspect of the present application provides a porous silicone resin precursor solution, comprising a flame retardant, a surfactant, a siloxane monomer, a catalyst, an auxiliary agent and a solvent; the porous silicone resin precursor solution isobtained by firstly dissolving the flame retardant and the surfactant in the solvent, and then adding the siloxane monomer, the catalyst and the auxiliary agent and mixingthem uniformly.

In the above porous silicone resin precursor solution, as a preferred embodiment, the solvent is water or alcohol; preferably, the solvent is at least one of water, ethanol and propanol; preferably, a mass ratio of the siloxane monomer to the solvent is 1: (0.1 ~5) (for example, 1:0.5, 1:1, 1:2, 1:3 and 1:4).

In the above porous silicone resin precursor solution, as a preferred embodiment, the surfactant is a cationic surfactant; preferably, the surfactant is a cationic surfactant; preferably, the surfactant is at least one selected from the group consisting of cetyltrimethylammonium chloride, cetyltrimethylammonium bromide, triethanolamine stearate, dodecylpyridine chloride and tetrabutylammonium fluoride; preferably, a mass ratio of the surfactant to the siloxane monomer is 1: (5~50)(for example, 1:8, 1:15, 1:20, 1:30 and 1:40).

In the above-mentioned porous silicone resin precursor solution, as a preferred embodiment, the flame retardant is oneor both selected from the group consisting of magnesium hydroxide, aluminum hydroxide, red phosphorus and modified halloysite tubes; preferably, a mass ratio of the flame retardant tothe siloxane monomer is 1: (5~100)(for example, 1:8, 1:20, 1:50, 1:70, 1:85).

The modified halloysite tube in the present application isobtained on the basis of the halloysite tube by the method such as coupling agent modification, intercalation modification, load modification, free radical modification and surfactant modification. The halloysite tube after being modified by chemical modificationcan be dissolved or uniformly dispersed in an organic solvent or an aqueous solution, or chemically react with the resin matrix.

In the above porous silicone resin precursor solution, as a preferred embodiment,the siloxane monomer comprises atleast three compounds selected from the group consisting ofdimethyldimethoxysilane, methyltrimethoxysilane, methyltriethoxysilane, vinyltrimethoxysilane, vinyltriethoxysilane, dimethyldiethoxysilane, propyltrimethoxysilane, propyltriethoxysilane, aminopropyl trimethoxysilane, aminopropyltriethoxysilane, trimethoxysilyl cage oligomeric silsesquioxane (POSS), triethoxysilyl cage oligomeric silsesquioxane (POSS), phenyltrimethoxysilane, phenyltriethoxysilane, diphenyldiethoxysilane,p-methylphenyltrimethoxysilane and p-methylphenyltriethoxysilane, and at least one in the atleast three compoundshasa benzene ring; the at least three compounds can be mixed in any proportion.

In the above-mentioned porous silicone resin precursor solution, as a preferred embodiment,the general structural formula of the trimethoxysilyl cage oligomeric silsesquioxane is: (R-SiO_{1.5})*ₙ*, wherein n is a natural number ranging from 4 to 20, and R is one of the following functional groups: 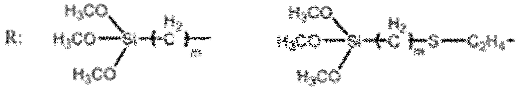 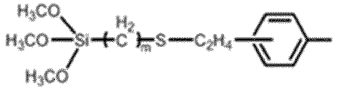 wherein, m is a natural number from 2 to 6.

In the above-mentioned porous silicone resin precursor solution, as a preferred embodiment, the general structural formula of the triethoxysilyl cage oligomeric silsesquioxane is: (R-SiO_{1.5})*ₙ*, wherein n is a natural number from 4 to 20, and R is one of the following functional groups: 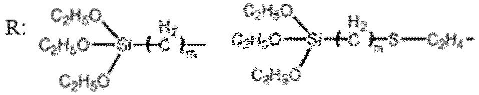 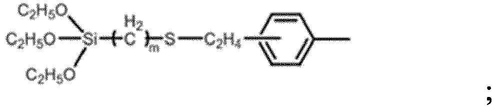 wherein, m is a natural number from 2 to 6.

In the above-mentioned porous silicone resin precursor solution, as a preferred embodiment,the catalyst is an acid catalyst; preferably, the catalyst is at least one selected from the group consisting of dilute hydrochloric acid, dilute nitric acid, glacial acetic acid and oxalic acid; preferably, a molar concentration of the catalyst is 0.005 ∼ 1.0 mol/L (for example, 0.008 mol/L, 0.0 1 mol/L, 0.05mol/L, 0.1 mol/L and0.5 mol/L); preferably, a ratio of amount of substance of the catalyst to the siloxane monomer is 1: (1∼500)(for example, 1:10, 1:50, 1:100, 1:300 and1:400).

In the above-mentioned porous silicone resin precursor solution, as a preferred embodiment,the auxiliary agent is a weak base substance; preferably, the auxiliary agent is at least one selected from the group consisting of dilute ammonia, urea, sodium carbonate, sodium bicarbonate, potassium carbonate, potassium bicarbonate, hexamethylenetetramine and melamine; preferably, the ratio of the amount of substance of the auxiliary agent to the siloxane monomer is 1: (0.25~5)(for example, 1:0.5, 1:1, 1:2, 1:3 and 1:4).

A second aspect of the present application provides a porous silicone resin, which is prepared from the above-mentioned porous silicone resin precursor solution through a curing process and a drying process.

In the above-mentioned porous silicone resin, as a preferred embodiment, a density of the porous silicone resin is 0.1~0.6g/cm³(for example, 0.2 g/cm³, 0.3g/cm³, 0.4g/cm³and 0.5g/cm³), a thermal conductivity at room temperature is ≤0.1W/(m·K)(for example, 0.04 W/(m·K), 0.05 W/(m·K), 0.06 W/(m·K) and 0.08 W/(m·K)), an average pore size is 100 nm~500 µm(for example, 200nm, 500nm, 50µm, 100µm, 200µm and 300µm), a porosity is ≥50%(for example, 55%, 60%, 62% and 65%), and a limiting oxygen index is ≥28%(for example, 30%, 31%, 32% and 35%) .

In the present application, the porous silicone resin is prepared by hydrolysis and polycondensation chemical reaction between the siloxane monomers. The reason why the reactable siloxane monomer must contain at least one siloxane monomer with a benzene ring is that the siloxane with a benzene ring can increase the flame retardant properties of porous silicone resin. The reason for choosing three or more siloxane monomers in the present application is that the inventors found that the porous silicone resin obtained by selecting any one of the above siloxane monomers cannot meet the performance requirements of high elasticity, and the flame retardant properties of the porous silicone resin obtained by selecting any two of the above siloxane monomers cannot meet the requirements for use. For example, when tetraethyl orthosilicate is used to prepare the silicone resin, the porous silicone resin cannot be obtained at all, and only the powdered silicon aerogels can be obtained.

In the present application,the addition of flame retardant can further improve the flame retardant performance of the material; the catalyst is used to catalyze the chemical reaction of hydrolysis and polycondensation between siloxane monomers; if the amount added is too large, the reaction rate will be too high, which is unfavorable for the formation of a uniform porous structure of the material;and if the amount added is too small, the reaction rate will be too slow; the main function of the auxiliary agent is to neutralize the excess hydrogen ions released by the reaction system;too much or too little addition of the auxiliary agent will affect the microstructure of the material; and then affect the macroscopic properties of the material. The main reason for selecting water or alcohols as the precursor solution solvent in the present application is that when water or alcohols are used as the solvent, it is more conducive to the hydrolysis of the siloxane monomer, and the amount of the solvent added is too large or too little will affect the strength, porosity and mechanical properties of the material; the main function of adding the surfactant is to reduce the surface tension during the subsequent drying process. Too much or too little addition of the surfactant will affect the microstructure of the material, and then it affects the porosity and average pore size of the material.

A third aspect of the present application provides a preparation method of the above-mentioned porous silicone resin, comprising:
(1) Preparation of porous silicone resin precursor solution: firstly adding the flame retardant and surfactant to the solvent and stirring for 10-20 min(for example, 12min, 15min and 17min), then adding the siloxane monomer, catalyst and auxiliary agent, and stirring vigorously for 30-300 min (for example, 70min, 90min, 150min, 200min and 260min)to obtain a porous silicone resin precursor solution;
(2) Curing process: under sealing conditions, curing the porous silicone resin precursor solutionat 60-120°C(for example, 75°C, 90°C and 110°C) for 12-72 h(for example, 24h, 36h, 48h and 56h), and then cooling to room temperature to obtain a porous silicone resin gel;
(3) Drying process: drying the wet porous silicone resin gel in step (2) to obtain the porous silicone resin.

In the above-mentioned preparation method of porous silicone resin, as a preferred embodiment, the drying comprises: firstly drying the wet porous silicone resin gel in step (2) at room temperature for no less than 24 hours, and then drying it in an oven at 60-80°C(for example, 65°C, 70°C and 75°C) for no less than 48 hours until the weight no longer decreases to obtain porous silicone resin.

In the drying step of the present application, in addition to normal pressure drying, drying can also be performed by carbon dioxide supercritical drying.

A fourth aspect of the present application provides a light-weight flexible flame-retardant composite material, comprising a light-weight flexible textile and the above porous silicone resin distributed in the surface and pores of the light-weight flexible textile.

In the above light-weight flexible flame-retardant composite material, as a preferred embodiment, a mass ratio of the porous silicone resin to the light-weight flexible textile is 1: (1~9)(for example, 1:3, 1:4, 1:5, 1:6, 1:7).

In the above light-weight flexible flame-retardant composite material, as a preferred embodiment,the light-weight flexible flame-retardant composite material has a density of 0.15∼0.50 g/cm³ (for example, 0.2 g/cm³, 0.3g/cm³, 0.4g/cm³, 0.45g/cm³), a thermal conductivity at room temperature of ≤0.10W/(m·K) (for example, 0.04 W/(m·K), 0.05 W/(m·K), 0.06 W/(m·K), 0.08 W /(m·K)), an average pore size of 100 nm~500 µm (for example, 200 nm, 500 nm, 50 µm, 100 µm, 200 µm and 300 µm), a porosity of≥50% (for example, 55%, 60%, 62% and 65%) ), a limiting oxygen index of ≥ 30% (for example, 32%, 35%, 36% and 38%), and a tensile fracture strain of ≥ 20% (for example, 25%, 28%, 30% and 32%).

In the above-mentioned light-weight flexible flame-retardant composite material, as a preferred embodiment, the light-weight flexible textile is at least one of a flexible two-dimensional cloth, a flexible non-woven three-dimensional fabric, and a three-dimensional flexible fabric.

A fifth aspect of the present application provides a preparation method of above-mentioned light-weight flexible flame-retardant composite material, comprising:
(1) preparation of porous silicone resin precursor solution: firstly addinga flame retardant and a surfactant to a solvent and stirring for 10-20 min(for example, 12min, 15min and 17min), then addinga siloxane monomer, a catalyst and an auxiliary agent, and stirring vigorously for 30-300 min(for example, 70min, 90min, 150min, 200min and 260min) to obtain porous silicone resin precursor solution;
(2) impregnation process: vacuum-dipping the light-weight flexible textile in the porous silicone resin precursor solution, an impregnation pressure is 0.05-0.5MPa(for example, 0.1 MPa, 0.25 MPa, 0.3 MPa and 0.4 MPa), and an impregnation time is 30-60 min(for example, 35min, 40 min and 50min);
(3) curing process: under sealing conditions, holding the temperature at 60-120 °C(for example, 75°C, 90°C and 110°C) for 12-72 hours (for example, 24h, 36h, 48h and 56h)for curing, and then cooling to room temperature to obtain a gel of the composite material;
(4) drying process: drying the gel of the composite material to obtain a light-weight flexible flame-retardant composite material.

In the above-mentioned light-weight flexible flame-retardant composite material, as a preferred embodiment, the drying includes: drying the gel of the composite material at room temperature for no less than 24 hours, and then drying it in an oven at 60-80°C(for example, 65°C, 70°C and 75°C) for no less than 48 hours until the weight is no longer reduced to obtain a light-weight flexible flame-retardant composite material.

In the drying step of the present application, in addition to normal pressure drying, drying can also be performed by carbon dioxide supercritical drying.

Compared with the prior art, the present application has the following effective effects:
(1) The porous silicone resin prepared by the present application is a porous material with an average pore diameter of 100 nm ~ 500 µm, a compressive strain > 50%, and a tensile fracture strain ≥ 30%,which can be used as high performance matrix resin for aerospace thermal protection and fire protection.
(2) The light-weight flexible flame-retardant composite material prepared by the present application has excellent properties of high temperature ablation resistance, flame retardancy, low density and low thermal conductivity, and can meet the needs of thermal protection, fire protection, heat insulation, warmth and the like in extreme thermal environments.
(3) The present application prepares porous silicone resin and light-weight flexible flame-retardant composite material by a sol-gel method. The reaction conditions are mild, the raw materials are cheap and easy to obtain, and it has the characteristics of wide applicability. A material with low shrinkage rate can be obtained (if the shrinkage rate of the material obtained after the drying process is too large, it means that the porous structure of the material collapses, the structure and performance are degraded, and it is uncontrollable).
(4) The porous silicone resin and light-weight flexible flame-retardant composite material prepared by the present application have great application value in the fields of aerospace vehicles, thermal protection, fire prevention, thermal insulation and the like.

### BRIEF DESCRIPTION OF THE DRAWINGS

Fig. 1 is a scanning electron microscope (SEM) picture of the porous silicone resin prepared in Example 1 of the present application.
Fig. 2 is a scanning electron microscope (SEM) picture of the light-weight flexible flame-retardant composite material prepared in Example 2 of the present application.
Fig. 3 is the TG-DSC curve of the light-weight flexible flame-retardant composite material prepared in Example 2 of the present application.
Figs. 4 and 5 are scanning electron microscope (SEM) pictures of the light-weight flexible flame-retardant composite material prepared in Example 3 of the present application.
Fig. 6 is a cyclic compressive stress-strain curve of the light-weight flexible flame-retardant composite material prepared in Example 3 of the present application.

### DETAILED DESCRIPTION OF THE EMBODYMENTS

The porous silicone resin with high porosity, high flame retardancy and high elasticity and the preparation method thereof, as well as the light-weight flexible flame-retardant composite material based on porous silicone resin as a matrix and the preparation method thereof of the present application are described below in conjunction with the accompanying drawings and examples. It should be understood that these examples are only used to illustrate the present application and not to limit the scope of the present application. It should be understood to the outside that, after reading the content of the present application, those skilled in the art make various changes and modifications to the present application, and these equivalent forms also fall within the scope defined by the appended claims of the present application.

The small molecule siloxane monomers described in the following examples can be obtained from open commercial sources, and the trimethoxysilyl cage oligomeric silsesquioxane or triethoxysilyl cage oligomeric silsesquioxane can be synthesized in the laboratory according to the routes reported in the open literature. All other raw materials used can be purchased from the market.

The specific embodiment of the present application provides a porous silicone resin, and its preparation method comprises:
(1) preparation of porous silicone resin precursor solution: firstly adding the flame retardant and surfactant to the solvent and stirring for 10-20 min, then adding the siloxane monomer, catalyst and auxiliary agent, and stirring vigorously for 30-300 min to obtain a porous silicone resin precursor solution;
(2) curing process: under sealing conditions, curing the porous silicone resin precursor solutionat 60-120°C for 12-72 hours, and then cooling to room temperature to obtain a porous silicone resin gel;
(3) drying process: firstly drying the wet porous silicone resin gel in step (2) at room temperature for no less than 24 hours, and then drying it in an oven at 60-80°C for no less than 48 hours until the weight no longer decreases to obtain porous silicone resin.

Another embodiment of the present application provides a light-weight flexible flame-retardant composite material, and its preparation method comprises:
(1) preparation of porous silicone resin precursor solution: firstly addinga flame retardant and a surfactant to a solvent and stirring for 10-20 min, then addinga siloxane monomer, a catalyst and an auxiliary agent, and stirring vigorously for 30-300 min to obtain porous silicone resin precursor solution;
(2) impregnation process: vacuum-dipping the light-weight flexible textile in the porous silicone resin precursor solution, an impregnation pressure is 0.05-0.5MPa, and an impregnation time is 30-60 min;
(3) curing process: under sealing conditions, holding the temperature at 60-120 °C for 12-72 hours for curing, and then cooling to room temperature to obtain a gel of the composite material;
(4) drying process: drying the gel of the composite material at room temperature for no less than 24 hours, and then drying it in an oven at 60-80°C for no less than 48 hours until the weight is no longer reduced to obtain a light-weight flexible flame- retardant composite material.

Wherein, in the preparation of the porous silicone resin or light-weight flexible flame-retardant composite material of the present application, the porous silicone resin precursor solution comprises a flame retardant, a surfactant, a siloxane monomer, a catalyst, an auxiliary agent and a solvent; theporous silicone resin precursor solution isobtained by firstly dissolving the flame retardant and the surfactant in the solvent, and then adding the siloxane monomer, the catalyst and the auxiliary agent and mixingthem uniformly.

Specifically, the solvent is water or alcohol; preferably, the solvent is at least one of water, ethanol and propanol; preferably, a mass ratio of the siloxane monomer and the solvent is 1: (0.1 ~5).

Specifically, the surfactant is a cationic surfactant; preferably, the surfactant is a cationic surfactant; preferably, the surfactant is one or more of cetyltrimethylammonium chloride, cetyltrimethylammonium bromide, triethanolamine stearate, dodecylpyridine chloride and tetrabutylammonium fluoride; preferably, a mass ratio of the surfactant to the siloxane monomer is 1: (5 ~ 50).

Specifically, the flame retardant is oneor both of magnesium hydroxide, aluminum hydroxide, red phosphorus and modified halloysite tubes; preferably, a mass ratio of the flame retardant tothe siloxane monomer is 1: (5~100).

Specifically, the siloxane monomer comprises at least three kinds of dimethyldimethoxysilane, methyltrimethoxysilane, methyltriethoxysilane, vinyltrimethoxysilane, vinyltriethoxysilane, dimethyldiethoxysilane, propyltrimethoxysilane, propyltriethoxysilane, aminopropyl trimethoxysilane, aminopropyltriethoxysilane, trimethoxysilyl cage oligomeric silsesquioxane (POSS), triethoxysilyl cage oligomeric silsesquioxane (POSS), phenyltrimethoxysilane, phenyltriethoxysilane, diphenyldiethoxysilane,p-methylphenyltrimethoxysilane and p-methylphenyltriethoxysilane, and must contain at least one kind of siloxane monomer with benzene ring; at least three kinds of siloxane monomers can be mixed in any proportion. The siloxane monomer and POSS in the embodiments of the present application include but are not limited to the monomers mentioned above.

Specifically, the catalyst is an acid catalyst; preferably, the catalyst is at least one of dilute hydrochloric acid, dilute nitric acid, glacial acetic acid and oxalic acid; preferably, a molar concentration of the catalyst is 0.005∼1.0 mol/L; preferably, a ratio of amount of substance of the catalyst to the siloxane monomer is 1: (1∼500).

Specifically,the auxiliary agent is a weak base substance; preferably, the auxiliary agent is at least one of dilute ammonia, urea, sodium carbonate, sodium bicarbonate, potassium carbonate, potassium bicarbonate, hexamethylenetetramine and melamine; preferably, the ratio of the amount of substance of the auxiliary agent to the siloxane monomer is 1: (0.25∼5).

The present application will be described in further detail below with reference to specific examples.

**Example 1:**A porous silicone resin, its preparation method comprises the following steps:
(1) Preparation of porous silicone resin precursor solution: Firstly, weigh 1.5 g of magnesium hydroxide, 0.3 g of cetyltrimethylammonium chloride and 8.0 g of deionized water, put them into a beaker and stir for 5 to 10 minutes to form a transparent solution; then weigh 5.0 g of methyltriethoxysilane, 2.0 g of dimethyldiethoxysilane and 1.0 g of phenyltriethoxysilane, and stir vigorously for 30 to 40 minutes; add 5ml of 0.1mol/L hydrochloric acid solution dropwise while stirring until the pH is about 5; the molar ratio of the added HCl to the total siloxane monomer is about 1:9. Continue stirring and add 0.1mol/L ammonia solution after hydrolysis for 60min to adjust the pH of the solution to be about 7.0 to obtain porous silicone resin precursor solution;
(2) curing process: transfer the above porous silicone resin precursor solution to a PP tube for sealing, then place it in an oven at 60°C to cure for 48 hours, and then cool to room temperature to obtain a porous silicone resin gel;
(3) drying process: leave the above wet porous silicone resin to air naturally at room temperature for 24 hours, and then transfer to an oven at 80°C for 48 hours to obtain the porous silicone resin.

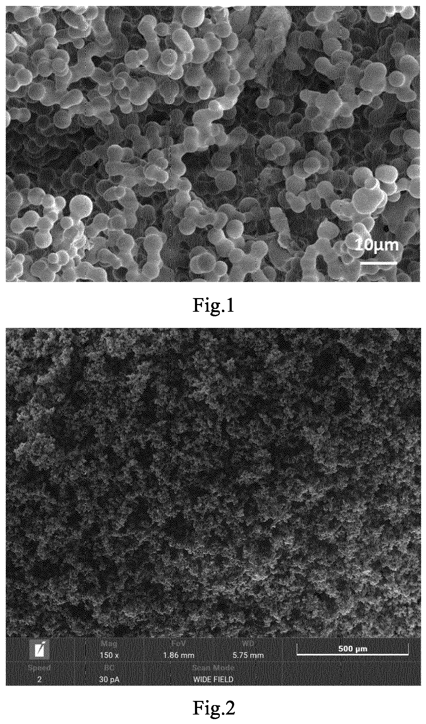

The SEM picture of the porous silicone resin prepared in Example 1 is shown in Fig. 1. It can be seen that it is in a loose and porous state, and the average pore size is 200 µm. The porous silicone resin obtained above was subjected to a compression cycle test, and the strain could still recover to 90% after 10 compression cycles, showing high elasticity.

**Example 2:** A light-weight flexible flame-retardant composite material, and its preparation method comprises the following steps:
(1) Preparation of porous silicone resin precursor solution: Firstly, add 5.0g of magnesium hydroxide and 4g of cetyltrimethylammonium chloride to a beaker with 50g of deionized water, and stir for 10 minutes to form a uniform and transparent solution; then add 30g of methyltrimethoxysilane, 20g of vinyltriethoxysilane and 7.0g of p-methylphenyltrimethoxysilane to the beaker, and stir vigorously; and then add 100 ml of 0.1 mol/L glacial acetic acid solution dropwise while stirring within 30 min, and continue to stir for 30 min; finally add 20 g of urea and continue to stir for 10 min to obtain a uniform porous silicone resin precursor solution;
(2) Impregnation process: put a light-weight flexible quartz fiber non-woven fabric (flexible non-woven three-dimensional fabric) with a size of 10cm×10cm×0.5cm and a mass of 7.55g into a steel mold with 10cm×10cm, vacuumize and introduce the above-mentioned porous silicone resin precursor solution into the mold until the solution fills the mold cavity, immerse for 30minunder the pressure of 0.15MPa, and seal after the immersion is completed;
(3) Curing process: hold the temperature for 24 hours in an oven at 80°C for curing, then cool to room temperature and place for 48 hours to obtain the gel of the composite material;
(4) Drying process: put the gel of the above composite material in a solvent of methanol/n-hexane=1/1, soak and wash three times, and then naturally dry at room temperature to obtain a light-weight flexible flame-retardant composite material witha mass of 11.82g.

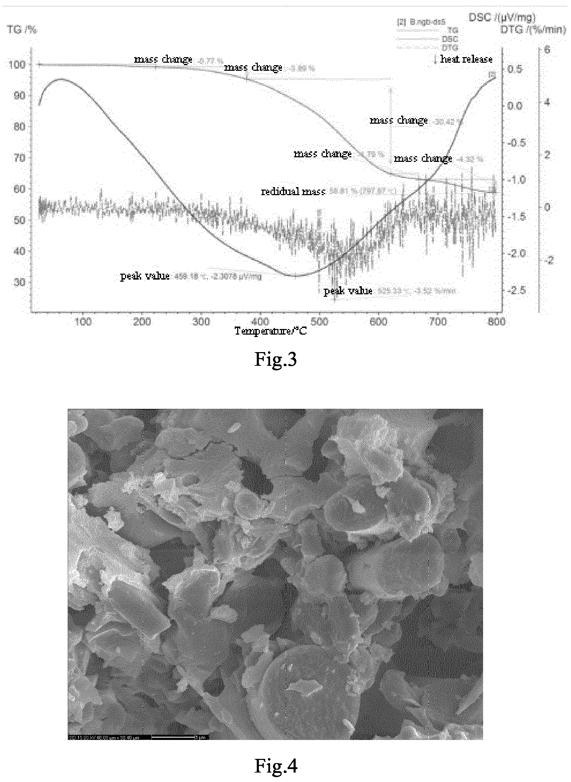

The mass ratio of porous silicone resin to flexible textile in the light-weight flexible flame-retardant composite material prepared in Example 2 is about 1:1.77, and its SEM picture is shown in Fig. 2. It can be seen that it is in a loose and porous state, and the average pore size is between 100 and 300 µm. Fig. 3 shows the TG-DSC curve in an inert atmosphere, and the residual weight at 800 °C is as high as 60%; the light-weight flexible flame-retardant composite material obtained above was subjected to a compression cycle test, and it still has a rebound rate of more than 90% after 10 compression cycles, showing high elasticity.

**Examples:** A light-weight flexible flame-retardant composite material, and its preparation method comprises the following steps:
(1) Preparation of porous silicone resin precursor solution: Firstly, add 500g of magnesium hydroxide and 500g of cetyltrimethylammonium bromide to a vesselwith 1000g ofmethyl alcohol, stir for 20 minutes to form a uniform and transparent solution, then add 2000g of methyltrimethoxysilane, 1200g ofdimethyldimethoxysilane, 500g of p-methylphenyltrimethoxysilane and 500 g of trimethoxysilyl cage oligomeric silsesquioxane (refer to the literature Langmuir, Facile Fabrication of Flexible, Robust and Superhydrophobic Hybrid Aerogel, 2019, 39: 8692-8698. forsynthesis) with the chemical formula of ((CH₃O)₃Si(CH₂)₃SCH₂CH₂-SiO_{1.5})₈ and the molecular weight of 2200g/mol, and stir vigorously; and then add 400 ml of 0.5 mol/L glacial acetic acid solution dropwise while stirring within 40 min, continue to stir for 20 min; finally add 600 g of urea, and continue to stir for 30 min to obtain a uniform porous silicone resin precursor solution;
(2) Impregnation process: put a light-weight flexible quartz fiber non-woven fabric with a size of 20cm×20cm×0.5cm and a mass of 31.4 g into a steel mold with20cm×20cm, vacuumize and introduce the above-mentioned porous silicone resin precursor solution into the mold until the solution fills the mold cavity, immerse for 45 minunder the pressure of 0.3 MPa, and seal after the immersion is completed;
(3) Curing process: hold the temperature for 36 hours in an oven at 70 °C for curing, then cool to room temperature and place for 48 hours to obtain the gel of the composite material;
(4) Drying process: put the gel of the above composite material in a solvent of methanol/n-hexane=1/1, soak and wash three times, and then naturally dry at room temperature to obtain a light-weight flexible flame-retardant composite material witha mass of48.6g.The mass ratio of porous silicone resin to light-weight flexible quartz fiber non-woven fabric is about 5:9.

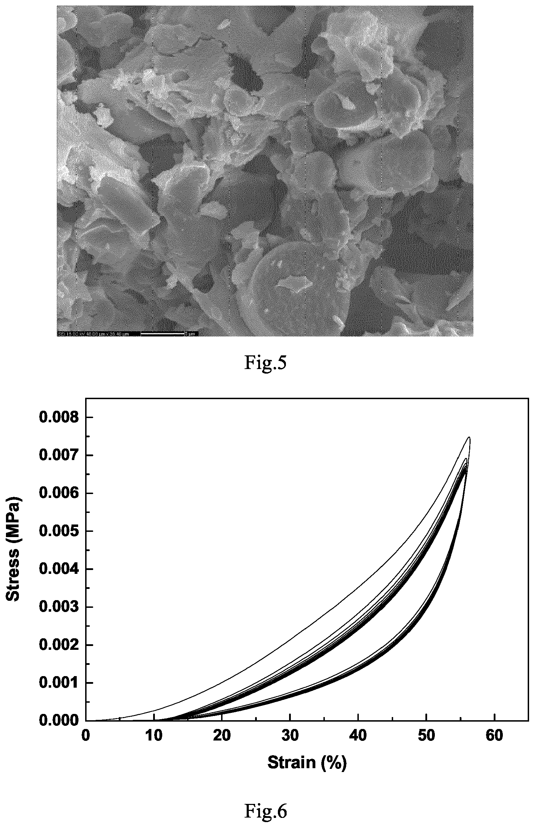

The SEM pictures of the light-weight flexible flame-retardant composite material obtained in Example 3are shown in Figs.4 and 5. It can be seen that it is in a loose and porous state, and the average pore size is between 300 and 500 µm. Figure 6 shows the cyclic compression stress-strain curve of the light-weight flexible flame-retardant composite material. After 10 compression cycles, it still has a rebound rate of more than 90%, showing high elasticity.

**Example 4:** A light-weight flexible flame-retardant composite material, and its preparation method comprises the following steps:
(1) Preparation of porous silicone resin precursor solution: Firstly, add 100 g of surface hydroxyl-modified halloysite tube suspension with a mass concentration of 25% and 15 g of tetrabutylammonium fluoride to the beaker, and stir for 30 minutes to form a uniform suspension, then add 50g of methyltrimethoxysilane, 200g of dimethyldimethoxysilane, 25g of vinyltrimethoxysilane, and 10g of p-methylphenyltrimethoxysilane to the beaker and stir vigorously;and then add 50 ml of 0.5 mol/L glacial acetic acid solution dropwise while stirring within 20 min, continue to stir for 20 min;finally, add25 g of urea and continue to stir for 30 min to obtain a uniform porous silicone resin precursor solution;
(2) put a combined flexible textile of light-weight flexible quartz fiber cloth and non-woven fabric (fiber and flexible two-dimensional cloth and flexible non-woven three-dimensional fabric) with a size of 10cm×10cm×0.5cm and a mass of 9.91g into a steel mold with 10cm×10cm, vacuumize and introduce the above-mentioned porous silicone resin precursor solution into the mold until the solution fills the mold cavity, immerse for 45 minunder the pressure of 0.2 MPa, and seal after the immersion is completed;
(3) Curing process: hold the temperature for 24 hours in an oven at 80 °C for curing, then cool to room temperature and place for 36 hours to obtain the gel of the composite material;
(4) Drying process: put the gel of the above composite material in a solvent of methanol/n-hexane=1/1, soak and wash three times, and then naturally dry at room temperature to obtain a light-weight flexible flame-retardant composite material witha mass of13.2g,wherein the mass ratio of porous silicone resin to light-weight flexible textile is about 1:3.

The light-weight flexible flame-retardant composite material obtained in Example 4 is in a loose and porous state, and the average pore size is between 300 and 500 µm.The porous silicone resin obtained above was subjected to a compression cycle test, and it still has a rebound rate of more than 85% after 10 compression cycles, showing high elasticity.

### Performance data test

The porous silicone resin and the light-weight flexible flame-retardant composite material prepared in Examples 1-4 of the present application were respectively subjected to a density test (according to GB/T 1463-2005 "Test Method for Density and Relative Density of Fiberreinforced Plastics"), determination of thermal conductivity at Ambient-temperature (according to ISO 22007 "Determination of Thermal Conductivity of Materials by Transient Planar Heat Source Method"), measurement of porosity (according to GB/T 3365-2008 "Carbon fiber reinforced plastics-Determination of void content and fiber volume content"), Determination of limiting oxygen index (according to ISO-4589 "Plastics - Determination of combustion behavior by oxygen index - Part 2: Ambient-temperature test", tensile strength determination (according to GB/T 1477-2005 "Test methods for tensile properties of fiber-reinforced plastics"), and the test results are shown in Table 1.

**Table 1 Performance data of the porous silicone resin and light-weight flexible flame-retardant composite material prepared inExamples 1-4 of the present application**

| Samples | Density (g/cm³) | Thermal conductivity (W/(m·k)) | Porosity (%) | Limiting oxygen index (LOI) | Tensile strength (MPa) | Fracture strain (%) |
|---|---|---|---|---|---|---|
| Example 1 | 0.16 | 0.048 | 79.6 | 29% | / | / |
| Example 2 | 0.22 | 0.049 | 67.2 | 32% | 1.5 | 30 |
| Example 3 | 0.28 | 0.051 | 64.8 | 35% | 1.0 | 37 |
| Example 4 | 0.36 | 0.087 | 59.6 | 38% | 1.7 | 36 |

The above descriptions are only preferred embodiments of the present application, and are not intended to limit the present application. Any modifications, equivalent replacements, improvements, etc. made within the spirit and principles of the present application all fall within the protectionscope of the pending claims of the present application.

## Claims

1. A porous silicone resin precursor solution, comprising a flame retardant, a surfactant, a siloxane monomer, a catalyst, an auxiliary agent and a solvent; the porous silicone resin precursor solution being obtained by firstly dissolving the flame retardant and the surfactant in the solvent, and then adding the siloxane monomer, the catalyst and the auxiliary agent and mixing them uniformly.

2. The porous silicone resin precursor solution according to claim 1, wherein the solvent is water or alcohol; preferably, the solvent is at least one of water, ethanol and propanol; preferably, a mass ratio of the siloxane monomer to the solvent is 1: (0.1 ~5).

3. The porous silicone resin precursor solution according to claim 1 or 2, wherein the surfactant is a cationic surfactant; preferably, the surfactant is at least one selected from the group consisting of cetyltrimethylammonium chloride, cetyltrimethylammonium bromide, triethanolamine stearate,dodecylpyridine chloride, and tetrabutylammonium fluoride; preferably, a mass ratio of the surfactant to the siloxane monomer is 1: (5 ~ 50).

4. The porous silicone resin precursor solution according to any one of claims 1to 3, wherein the flame retardant is one or both selected from the group consisting of magnesium hydroxide, aluminum hydroxide, red phosphorus and modified halloysite tubes; preferably, a mass ratio of the flame retardant to the siloxane monomer is 1: (5~100).

5. The porous silicone resin precursor solution according to any one of claims 1 to 4, wherein the siloxane monomer comprises atleast three compounds selected from the group consisting of dimethyldimethoxysilane, methyltrimethoxysilane, methyltriethoxysilane, vinyltrimethoxysilane, vinyltriethoxysilane, dimethyldiethoxysilane, propyltrimethoxysilane, propyltriethoxysilane, aminopropyl trimethoxysilane, aminopropyltriethoxysilane, trimethoxysilyl cage oligomeric silsesquioxane, triethoxysilyl cage oligomeric silsesquioxane, phenyltrimethoxysilane, phenyltriethoxysilane, diphenyldiethoxysilane,p-methylphenyltrimethoxysilane and p-methylphenyltriethoxysilane, and at least one in the atleast three compoundshasa benzene ring; the at least three compoundscan be mixed in any proportion;
preferably, the general structural formula of the trimethoxysilyl cage oligomeric silsesquioxane is: (R-SiO_{1.5})*ₙ*, wherein n is a natural number ranging from 4 to 20, and R is one of the following functional groups: 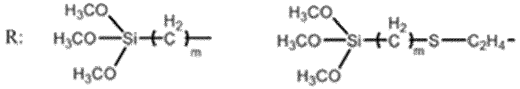 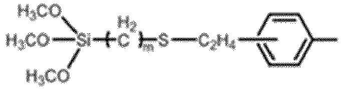 wherein, m is a natural number from 2 to 6;
preferably, the general structural formula of the triethoxysilyl cage oligomeric silsesquioxane is: (R-SiO_{1.5})*ₙ*, wherein *n* is a natural number from 4 to 20, and R is one of the following functional groups: 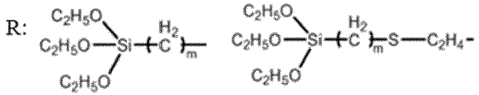 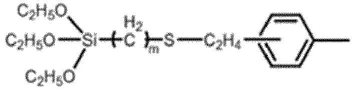 wherein, m is a natural number from 2 to 6.

6. The porous silicone resin precursor solution according to any one of claims 1 to5, wherein the catalyst is an acid catalyst; preferably, the catalyst is at least one selected from the group consisting of dilute hydrochloric acid, dilute nitric acid, glacial acetic acid and oxalic acid; preferably, a molar concentration of the catalyst is 0.005~1.0 mol/L; preferably, a ratio of amount of substance of the catalyst to the siloxane monomer is 1: (1∼500); preferably, the auxiliary agent is a weak base substance; preferably, the auxiliary agent is at least one selected from the group consisting of dilute ammonia, urea, sodium carbonate, sodium bicarbonate, potassium carbonate, potassium bicarbonate, hexamethylenetetramine and melamine; preferably, the ratio of the amount of substance of the auxiliary agent to the siloxane monomer is 1: (0.25∼5).

7. A porous silicone resin, whereinthe porous silicone resin is prepared from the porous silicone resin precursor solution according to any one of the claims 1to6 through a curing process and a drying process; preferably, a density of the porous silicone resin is 0.1~0.6g/cm³, a thermal conductivity at room temperature is ≤0.1W/(m·K), an average pore size is 100 nm~500 µm, a porosity is ≥50%, and a limiting oxygen index is ≥28%.

8. A preparation method of the porous silicone resin according to claim 7, comprising:
(1) preparation of a porous silicone resin precursor solution comprising: firstlyadding the flame retardant and surfactant to the solvent and stirring for 10-20 min, then adding the siloxane monomer, thecatalyst and the auxiliary agent, and stirring vigorously for 30-300 min to obtain theporous silicone resin precursor solution;
(2) curing process comprising: curing the porous silicone resin precursor solutionat 60-120 °C for 12-72 hoursunder sealing conditions, and then cooling to room temperature to obtain a porous silicone resin gel;
(3) drying process comprising: drying the wet porous silicone resin gel in step (2) to obtain the porous silicone resin;
preferably, the drying comprising: firstly drying the wet porous silicone resin gel in step (2) at room temperature for no less than 24 hours, and then drying in an oven at 60-80 °C for no less than 48 hours until the weight no longer decreases to obtain the porous silicone resin.

9. A light-weight flexible flame-retardant composite material, comprising a light-weight flexible textile and the porous silicone resin according to claim 7 distributed in the surface and pores of the light-weight flexible textile;
preferably, a mass ratio of the porous silicone resin to the light-weight flexible textile is 1: (1∼9);
preferably, the light-weight flexible flame-retardant composite material has a density of 0.15∼0.50 g/cm³, a thermal conductivity at room temperature of ≤0.10W/(m·K), an average pore size of 100 nm~500 µm, a porosity of ≥50%, a limiting oxygen index of ≥30%, and a tensile fracture strain of ≥20%;
Preferably, the light-weight flexible textile is at least one selected from the group consisting of a flexible two-dimensional cloth, a flexible non-woven three-dimensional fabric, and a three-dimensional flexible fabric.

10. A preparation method of the light-weight flexible flame-retardant composite material according to claim 9, comprising:
(1) preparation of a porous silicone resin precursor solution comprising: firstly addinga flame retardant and a surfactant to a solvent and stirring for 10-20 min, then addinga siloxane monomer, a catalyst and an auxiliary agent, and stirring vigorously for 30-300 min to obtain the porous silicone resin precursor solution;
(2) impregnation processcomprising: vacuum-dipping the light-weight flexible textile in the porous silicone resin precursor solution, wherein an impregnation pressure is 0.05-0.5MPa, and an impregnation time is 30-60 min;
(3) curing processcomprising: holding the temperature at 60-120 °C for 12-72 hours for curing under sealing conditions, and then cooling to room temperature to obtain a gel of the composite material;
(4) drying process comprising: drying the gel of the composite material to obtain the light-weight flexible flame-retardant composite material;
preferably, the drying comprising: drying the gel of the composite material at room temperature for no less than 24 hours, and then drying in an oven at 60-80 °C for no less than 48 hours until the weight is no longer reduced to obtain the light-weight flexible flame- retardant composite material.
